(19) **Europäisches Patentamt / European Patent Office / Office européen des brevets**

(11) **EP 3 274 210 B1**

(12) **EUROPEAN PATENT SPECIFICATION**

(45) Date of publication and mention of the grant of the patent:
**23.06.2021   Bulletin 2021/25**

(21) Application number: **16711653.2**

(22) Date of filing: **24.03.2016**

(51) Int Cl.:
**B60L 58/22** *(2019.01)*

(86) International application number:
**PCT/EP2016/056519**

(87) International publication number:
**WO 2016/151077 (29.09.2016 Gazette 2016/39)**

(54) **AUXILIARY BATTERY CHARGING APPARATUS AND METHOD**

HILFSBATTERIELADEVORRICHTUNG UND VERFAHREN

APPAREIL ET PROCÉDÉ DE CHARGEMENT DE BATTERIE AUXILIAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **24.03.2015   GB 201504978**

(43) Date of publication of application:
**31.01.2018   Bulletin 2018/05**

(73) Proprietor: **Jaguar Land Rover Limited Coventry, Warwickshire CV3 4LF (GB)**

(72) Inventors:
• **TUCKER, Mark**
  **Coventry**
  **Warwickshire CV3 4LF (GB)**
• **GREENWOOD, Jeremy**
  **Coventry**
  **Warwickshire CV3 4LF (GB)**

(74) Representative: **Holmes, Matthew William Jaguar Land Rover Patents Department W/1/073 Abbey Road Whitley, Coventry CV3 4LF (GB)**

(56) References cited:
EP-A2- 0 913 288          EP-A2- 0 913 288
JP-A- 2009 055 690        JP-A- 2009 055 690
JP-A- 2013 233 028        US-A1- 2013 127 399
US-A1- 2013 127 399       US-A1- 2014 232 346

**Description**

TECHNICAL FIELD

The present disclosure relates to an auxiliary battery charging apparatus, to a vehicle having an auxiliary battery charging apparatus and to a method of charging an auxiliary battery.

BACKGROUND

It is known to provide a vehicle, such as an automobile, with one or more electric traction motors powered by a main battery. The main battery typically comprises a plurality of modules to provide a high voltage supply to the electric traction motor. The main battery can provide power to other vehicle systems, such as cabin heating. A plurality of said modules are typically arranged to form a pack. The vehicle can also be provided with an auxiliary battery to power auxiliary vehicle systems. The auxiliary battery typically operates at a low voltage, for example 12V. The vehicle can, for example, be a battery electric vehicle (BEV), a plug-in hybrid electric vehicle (PHEV) or a hybrid electric vehicle (HEV).

Charging and discharging is terminated when a measured voltage of any of the cells in the module reaches a predefined minimum or maximum value (outside of which cell damage or a safety hazard may occur). Cell imbalance in the module may be caused by cells of different capacities, state-of-charge or internal resistance possibly caused by ageing, cycling under different conditions (e.g. different temperature within pack) or through manufacturing differences and poor module/pack cell matching. The effect of cell imbalance is that module charging or discharging may be terminated early when a first cell reaches a maximum or minimum value. Early charging termination results in the energy stored being less than the capacity, whilst early discharge termination results in the energy used being less than is available (so useable capacity is effectively governed by the weakest cells in an unbalanced pack). Hence a problem arises in the efficient balancing of cells to maximise the useable capacity whilst not exceeding cell operating limits.

Various cell balancing solutions exist, including: passive balancing where energy is dissipated from highly charged cells; charge shunting where charging current by-passes cells as they become fully charged; inductive active balancing where energy is redistributed between cells; and capacitive active balancing where energy is redistributed between cells. Of these known methods active balancing has the potential to offer energy efficiency benefits over other forms of balancing and so is of interest to future electric vehicle applications. Active balancing typically provides a means to move charge from any one cell in a module/pack to all the cells in the module/pack (or to move charge from all the cells in a module/pack to any cells in the module/pack). The charge is moved via an intermediate storage device, for example a transformer (inductor) or a capacitor.

At present electric vehicles have a low voltage (e.g. 12V lead acid) battery to power the vehicle systems in addition to the high voltage pack that provides the traction energy. In conventional petrol/diesel powered vehicles the low voltage battery is recharged from an alternator coupled to the internal combustion engine. On electric vehicles the recharging can be from the high voltage pack using a dc-dc convertor that is expensive as well as heavy and requires significant packaging space. Hence it is beneficial to recharge the low voltage battery efficiently without the need of a dc-dc convertor.

It is known from EP 2 506 388 to charge an auxiliary battery using rechargeable battery cells of a main battery. The auxiliary battery charging apparatus uses the main battery to charge the auxiliary battery and then equalises the output voltages of the modules in the main battery. Alternatively, the auxiliary battery can be charged from the main battery after equalising the output voltages of the modules EP 0 913 288 relates to a maintenance procedure for a main battery of a vehicle. When the vehicle is not operating, a maintenance procedure takes place in which one or more modules of the battery are charged and then partially discharged, where the full charging tends to reduce sulfation in the modules and partial discharging restores the modules to their prior charge condition. An auxiliary battery may also be recharged from the main battery via a DC-DC converter by selecting the module having the highest charge and using this module to at least partially charge the auxiliary battery.

It is against this background that the present invention has been conceived. At least in certain embodiments, the present invention seeks to overcome or ameliorate at least some of the problems associated with the prior art methods and apparatus.

SUMMARY OF THE INVENTION

Aspects and embodiments of the present invention relate to an auxiliary battery charging apparatus, to a vehicle and to a method of charging an auxiliary battery, as set out in the appended claims.

According to a first aspect of the present invention there is provided a system comprising a main battery and an auxiliary battery charging apparatus for charging an auxiliary battery from the main battery, the main battery having at least a first module comprising a plurality of first cells and a second module comprising a plurality of second cells. The main battery comprises a first module controller for monitoring said first cells and a second module controller for monitoring said second cells. The apparatus is configured to receive data from the first module controller and the second module controller. The apparatus comprises an intermediate storage device for connection to the auxiliary battery. The apparatus comprises a first switch unit for selectively connecting one or more of the first cells to the intermediate storage device and a second switch unit for selectively connecting one or more of said second cells to the intermediate storage device. The apparatus comprises a charging control unit having an electronic processor configured to receive a first balance control signal for identifying one or more of said first cells having a relatively low depth-of-discharge from the first module controller and a second balance control signal for identifying one or more of said second cells of the second module having a relatively low depth-of-discharge from the second module controller.

In dependence on the first balance control signal, the electronic processor is configured to output a first switch unit control signal to control said first switch unit to connect the identified one or more first cell to the intermediate storage device to charge the auxiliary battery and in dependence on the second balance control signal, the electronic processor is configured to output a second switch unit control signal to control said second switch unit to connect the identified one or more second cell to the intermediate storage device.

The first module may comprise the first module controller for monitoring said first cells. The second module may comprise the second module controller for monitoring said second cells.

The first module controller may be incorporated into the first module.

The main battery may comprise said first module and a second module.

The controller may be configured to output a second switch unit control signal to control said second switch unit. The second switch unit can to connect the identified one or more second cell having a relatively low depth-of-discharge second cell to the intermediate storage device to charge the auxiliary battery. In dependence on the second switch unit control signal, the second switch unit may be switched to a closed state to connect the identified one or more second cell having a relatively low depth-of-discharge to the intermediate storage device. The second switch unit can be switched to an open state to disconnect the identified one or more second cell from the intermediate storage device. The second switch unit can be switchable between said closed state and said open state in dependence on the second switch unit control signal. If the second balance control signal indicates that one or more of said second cells has a relatively low depth-of-discharge, the electronic processor can be configured to output a second switch unit control signal to switch said second switch unit to said closed state. If the second balance control signal indicates that the identified one or more second cell no longer has a relatively low depth-of-discharge, the electronic processor can be configured to output a second switch unit control signal to switch said second switch unit to said open state.

In dependence on the second balance control signal, the controller may be configured to output a second switch unit control signal to control said second switch unit to connect the identified one or more second cell having a relatively low depth-of-discharge to the intermediate storage device. By connecting the identified one or more second cell having a relatively low depth-of-discharge to the intermediate storage device, charging of the auxiliary battery and balancing of the second cells in said second module may be performed at the same time. The second switch unit may be switched to a closed state to connect the identified one or more second cell having a relatively low depth-of-discharge to the intermediate storage device. If the second balance control signal identifies one or more of said second cells having a relatively low depth-of-discharge, the electronic processor may be configured to output a second switch unit control signal to switch said second switch unit to said closed state such that the identified one or more second cell having a relatively low depth-of-discharge is connected to the intermediate storage device. If the second balance control signal indicates that the identified one or more second cell no longer has a relatively low depth-of-discharge, the electronic processor is configured to output a second switch unit control signal to switch said second switch unit said open state to disconnect the one or more second cell from the intermediate storage device.

The electronic processor may be configured to receive said second balance control signal from a second module controller for monitoring said second cells. The second module controller may monitor the depth-of-discharge of each of said second cells. For example, the second module controller may measure the cell voltage or estimate the state-of-charge for ascertaining which of said second cells have a relatively low depth-of-discharge. The second module controller may be configured to selectively connect each of the identified one or more second cells. The second module controller may be incorporated into the second module.

The intermediate storage device may comprise one or more transformer. The energy from the main battery may be stored in a magnetic field.

The intermediate storage device may comprise one or more capacitor. The energy from the main battery may be stored in an electrical field.

There is further provided a system comprising an auxiliary battery charging apparatus and a main battery as described in the first aspect, in combination with an auxiliary battery. The auxiliary battery may be a low voltage battery, for example a 12V battery. The main battery may be a high voltage battery, for example comprising a plurality of modules each having a plurality of cells. The cells can, for example, be lithium ion cells. The modules may each comprise a module controller for monitoring one or more of the following: the pack current, cell voltage, capacity and state-of-charge of the cells.

According to an aspect of the present invention there is provided a vehicle comprising a system as described in the first aspect.

According to an aspect of the present invention there is provided a method of charging an auxiliary battery from a main battery by means of an auxiliary battery charging apparatus comprising a first switch unit, a second switch unit, and an intermediate storage device, the main battery having at least a first module comprising a plurality of first cells and a second module comprising a plurality of second cells. The auxiliary battery charging apparatus performing receiving a first balance control signal from a first module controller. The auxiliary battery charging apparatus performing identifying from the first balance control signal one or more of said first cells having a relatively low depth-of-discharge. The auxiliary battery charging apparatus performing receiving a second balance control signal from a second module controller in the main battery. The auxiliary battery charging apparatus performing identifying from the second balance control signal one or more of said second cells having a relatively low depth-of-discharge The auxiliary battery charging apparatus performing controlling the first switch unit to connect the identified one or more first cell to the intermediate storage device connected to the auxiliary battery to charge the auxiliary battery from the main battery. The auxiliary battery charging apparatus performing controlling the second switch unit to connect the identified one or more second cell to the intermediate storage device to charge the auxiliary battery from the main battery.

By connecting the identified one or more first cell having a relatively low depth-of-discharge to the intermediate storage device, charging of the auxiliary battery and balancing of the first cells in said first module may be performed at the same time. The active balancing of the first cells may be performed while the main battery is charging.

The method may comprise monitoring each of said first cells to identify one or more of said first cells having a relatively low depth-of-discharge. In order to identify one or more of said first cells having a relatively low depth-of-discharge, the method may comprise monitoring each of said first cells to determine one or more of the following: a pack current, a cell voltage, a cell capacity and a cell state-of-charge

In order to identify one or more of said second cells having a relatively low depth-of-discharge, the method may comprise monitoring each of said second cells to determine one or more of the following: a pack current, a cell voltage, a cell capacity and a cell state-of-charge. By connecting the identified one or more second cell having a relatively low depth-of-discharge to the intermediate storage device, charging of the auxiliary battery and balancing of the second cells in said second module may be performed at the same time. The active balancing of the second cells may be performed while the main battery is charging.

The intermediate storage device may comprise one or more transformer. The intermediate storage device may comprise one or more capacitor.

The charging control unit referenced herein may suitably comprise a computational device having one or more electronic processors. Thus the auxiliary battery charging apparatus may comprise a single control unit or electronic controller or alternatively different functions may be embodied in, or hosted in, different control units. As used herein the term "control unit" will be understood to include both a single control unit and a plurality of control units collectively operating to provide any stated control functionality. To configure a control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said control unit to be executed on said computational device. A first control unit may be implemented in software run on one or more processors. One or more other control units may be implemented in software run on one or more processors, optionally the same one or more processors as the first control unit. Other suitable arrangements may also be used.

Within the scope of the claims it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment may be combined in any way and/or combination, unless such features are incompatible.

BRIEF DESCRIPTION OF THE DRAWINGS

One or more embodiments of the present invention will now be described, by way of example only, with reference to the accompanying figures, in which:

Figure 1 shows a schematic representation of an auxiliary battery charging apparatus in accordance with an embodiment of the present invention;

Figure 2 shows a circuit diagram of the auxiliary battery charging apparatus shown in Figure 1; and

Figure 3 shows a connection arrangement for a transformer in the intermediate storage device in the auxiliary battery charging apparatus.

DETAILED DESCRIPTION

Embodiments of the invention can combine active cell balancing with charging an auxiliary battery, via an intermediate storage device, thereby removing the need for a dc-dc convertor as in previously considered systems. In embodiments, charge moved to the intermediate storage device may not be returned to any of the cells within the main battery, and can be used to recharge the auxiliary battery. Efficient cell balancing can thus be achieved, as well as recharging a (auxiliary) low voltage battery without need for a dc-dc convertor, saving weight, space and cost.

Active balancing has the potential to offer energy efficiency benefits over other forms of balancing and so may be of benefit in electric vehicle applications. For example, active balancing has the advantage over passive balancing that the latter can be highly time-consuming, taking of the order of tens of hours, rather than hours or minutes.

In addition, embodiments of the invention can provide balancing of one or more modules of the main battery pack, and using the charge to charge the auxiliary battery. This may provide better efficiency than a method which would balance charge across an entire pack, and then transfer charge from the entire pack to an auxiliary battery, as this may require a large convertor to charge the auxiliary battery (i.e. requiring (at least) one less primary). In addition, addressing modules rather than the entire pack in this and other embodiments of the invention entails that there can be a maximum voltage threshold over which the system will not be required to perform (for example, because such a large convertor is not required), which provides a system which is easier to manage.

Where more than one module of the main battery pack is addressed for balancing before charging the auxiliary battery, modules may be switched in as required, so that the required charge for recharging can be sourced from more than one module, and at the same time the entire pack can be balanced, module by module.

In contrast to a method in which charge may be taken from either the pack, or a module of the main battery for recharging an auxiliary battery, embodiments of the invention provide active balancing (i.e. addressing the cell level of the main battery) in addition to charging the auxiliary battery. For example, in embodiments one (or more) single cell of the main battery having a relatively low depth-of-discharge can be identified (for example, by a balance control signal), and then connected for charging the auxiliary battery (for example, via an intermediate charge store). Furthermore, embodiments of the invention can therefore address the main battery at the cell level, and also at the module level (by balancing modules of the main battery in turn, as described herein), providing additional flexibility.

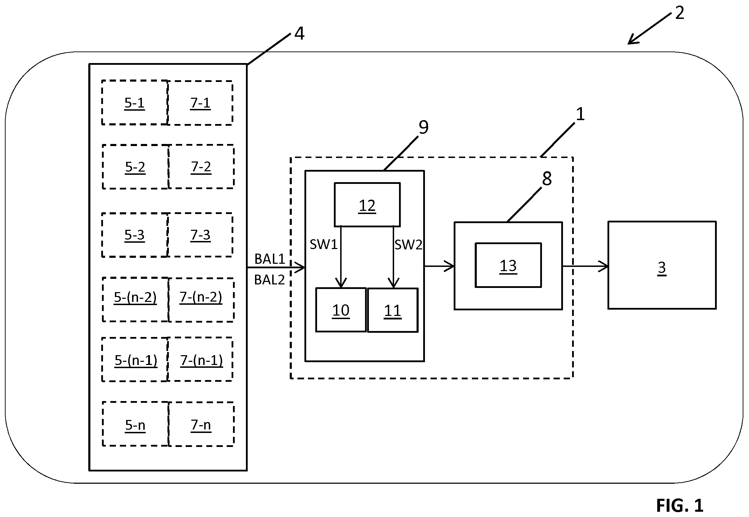

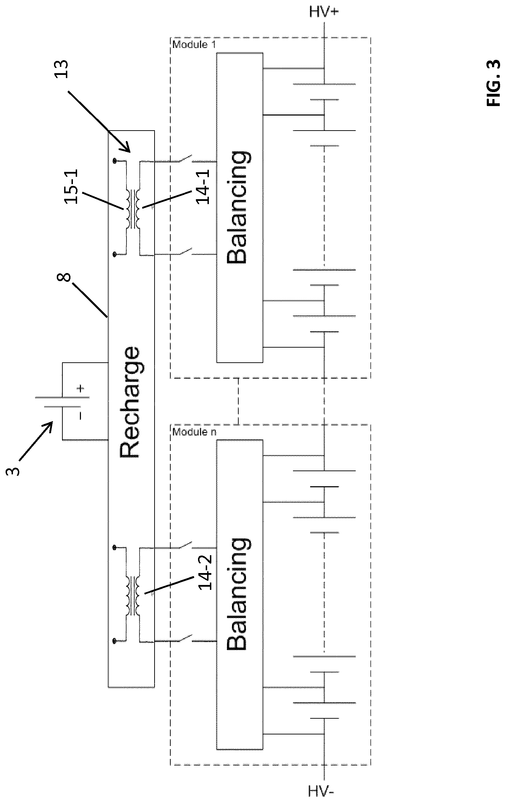

An auxiliary battery charging apparatus 1 in accordance with an embodiment of the present invention will now be described with reference to Figures 1, 2 and 3. As shown in Figure 1, the auxiliary battery charging apparatus 1 in the present embodiment is disposed in a vehicle 2 having an auxiliary battery 3 and a main battery 4. The auxiliary battery charging apparatus 1 is configured to charge the auxiliary battery 3 whilst performing active balancing of the main battery 4. The vehicle 2 can be a battery electric vehicle (BEV), a hybrid electric vehicle (HEV) or a plug-in hybrid electric vehicle (PHEV). The auxiliary battery 3 is low voltage, for example a 12V lead acid battery, for powering auxiliary systems in the vehicle 2; and the main battery 4 is a high voltage battery for supplying traction energy to one or more electric traction motor (not shown) to propel the vehicle 2.

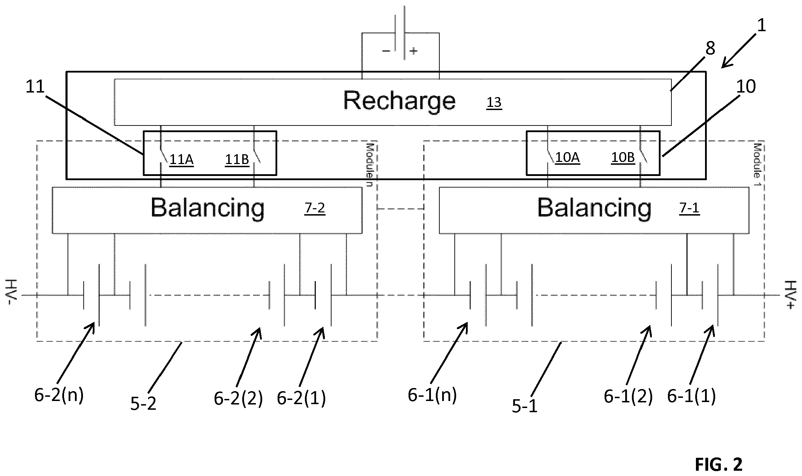

As shown in figure 2, the main battery 4 comprises one or more module 5-n each having a plurality of rechargeable battery cells 6(n) and a module controller 7-n. The cells 6(n) contained in each module 5-n are connected to each other in series; and a plurality of said modules 5-n can be connected to each other in series to form a string (not shown). The main battery 4, or pack, can comprise one or more string of said modules 5-n. By way of example, the auxiliary battery charging apparatus 1 is described herein with reference to a main battery 4 having first and second modules 5-1, 5-2. The first module 5-1 comprises a plurality of first cells 6-1, and the second module 5-2 comprises a plurality of second battery cells 6-2. It will be understood that the main battery 4 can comprise a single module 5-n or more than two modules 5.

The module controller 7-n is incorporated into the module 5-n and is operative to monitor and balance the cells 6(n) therein. In the illustrated arrangement, a first module controller 7-1 is disposed in the first module 5-1, and a second module controller 7-2 is disposed in the second module 5-2. The first module controller 7-1 is configured to monitor the first cells 6-1 in the first module 5-1; and the second module controller 7-2 is configured to monitor the second cells 6-2 in the second module 5-2. The first and second module controllers 7-1, 7-2 estimate the depth-of-discharge of the first and second cells 6-1, 6-2 in the first and second modules 5-1, 5-2 in dependence on the measured string or pack current, measured cell voltage, estimated capacity and estimated state-of-charge. The depth-of-discharge (D) is the amount of charge that has been removed from the cell and is measured in ampere hours (Ah). The depth-of-discharge (D) is calculated as follows:

$$D = C-Q = C*(1-S/100)$$

Where: C = Cell capacity (i.e. the amount of charge a cell can store) measured in Ah;
Q = Cell charge (i.e. the amount of charge a stored in a cell) measured in Ah; and
S = state-of-charge (i.e. a relative measure of the charge stored normalised to the capacity) measured in %, where S = 100*Q/C

Ignoring the voltage drop across internal resistance (that is significant if the current and resistance of a cell is high relative to others, but the assumption is valid on charge as the current is reduced as end-of-charge is neared), the cell having the lowest depth-of-discharge will reach the charge voltage limit first and may prematurely stop the charging. Such cells need discharging to balance the pack. The cell with the highest depth-of-discharge will reach the discharge voltage limit first and may prematurely stop the discharging.

The first module controller 7-1 identifies any of the first cells 6-1 having a relatively low depth-of-discharge compared to the other first cells 6-1 in said first module 5-1. The second module controller 7-2 identifies any of the second cells 6-2 having a relatively low depth-of-discharge compared to the other second cells 6-2 in said second module 5-2. The first cell 6-1 in the first module 5-1 having the lowest depth-of-discharge (relative to the other first cells 6-1) in the first module 5-1 is identified. Similarly, the second cell 6-2 in the second module 5-2 having the lowest depth-of-discharge (relative to the other second cells 6-2) in the second module 5-2 is identified. The first and second module controllers 7-1, 7-2 are configured to output respective first and second balance control signals BAL1, BAL2 to indicate which one or more of said first cells 6-1 and/or which one or more of said second cells 6-2 has the lowest depth-of-discharge.

The auxiliary battery charging apparatus 1 comprises an auxiliary battery charging unit 8; a charging control unit 9; a first switch unit 10; and a second switch unit 11. The auxiliary battery charging unit 8 is operative to charge the auxiliary battery 3 from the main battery 4. The charging control unit 9 comprises at least one electronic processor 12 for executing a set of instructions stored in system memory. The charging control unit 9 is configured to receive said first and second balance control signals BAL1, BAL2 output by the first and second module controller 7-1, 7-2. In dependence on the first and second balance control signals BAL1, BAL2, the charging control unit 9 is configured to output first and second switch unit control signals SW1, SW2. The first switch unit 10 has first and second switches 10A, 10B operable to connect one or more of the first cells 6-1 in the first module 5-1 to the auxiliary battery charging unit 8; and the second switch unit 11 has first and second switches 11A, 11B operable to connect one or more of the second cells 6-2 in the second module 5-2 to the auxiliary battery charging unit 8. The first and second switch unit 10, 11 are controlled in dependence on said first and second switch unit control signals SW1, SW2. In particular, the first and second switch units 10, 11 are switched between respective open and closed states in dependence on said first and second switch unit control signals SW1, SW2. By controlling the first and second switch units 10, 11, the auxiliary battery charging unit 8 can selectively connect and disconnect said first cell 6-1 in the first module 5-1 and/or said second cell 6-2 in the second module 5-2.

When the first and second switches 10A, 10B of the first switch unit 10 are in an open state, the first module 5-1 is disconnected from the auxiliary battery charging unit 8. Conversely, when the first and second switches 10A, 10B of the first switch unit 10 are in a closed state, the first module 5-1 is electrically connected to the auxiliary battery charging unit 8. When the first and second switches 11A, 11B of the second switch unit 11 are in an open state, the second module 5-2 is disconnected from the auxiliary battery charging unit 8. Conversely, when the first and second switches 11A, 11B of the second switch unit 11 are in a closed state, the second module 5-2 is electrically connected to the auxiliary battery charging unit 8.

By monitoring the cell voltages, string or pack current, estimating cell state-of-charge and estimating cell capacity of the first and second cells 6-1, 6-2 in the respective first and second modules 5-1, 5-2, the first and second module controllers 7-1, 7-2 can identify which of said first and second cells 6-1, 6-2 have a relatively low depth-of-discharge. In dependence on the determined depth-of-discharge of the first cells 6-1 in the first module 5-1, the first module controller 7-1 is configured to electrically connect one or more of said first cells 6-1 to the first and second switch units 10. In dependence on the determined depth-of-discharge of the second cells 6-2 in the second module 5-2, the second module controller 7-2 is configured to electrically connect one or more of said second cells 6-2 to the second switch unit 11. By controlling the state of said first and second switch units 10, 11, the charging control unit 9 can control the electrical connection of said first and second cells 6-1, 6-2 to the auxiliary battery charging unit 8. By way of example, if the first module controller 7-1 identifies a first cell 6-1 in the first module 5-1 having a relatively low depth-of-discharge, the first module controller 7-1 outputs a first balance control signal BAL1 and electrically connects the identified first cell 6-1 to the first switch unit 10. The charging control unit 9 receives the first balance control signal BAL1 and switches the first switch unit 10 to a closed state to connect the identified first cell 6-1 to the auxiliary battery charging unit 8.

In the present embodiment, the auxiliary battery charging unit 8 comprises an intermediate energy storage device 13 associated with the first and second modules 5-1, 5-2 respectively. The intermediate energy storage device 13 isolates the auxiliary battery 3 from the main battery 4. In the present embodiment, the intermediate first energy storage device 13 is in the form of a transformer for storing energy in a magnetic field. The transformer 13 comprises a first primary winding 14-1, a second primary winding 14-2, and a single secondary winding 15-1. The first primary winding 14-1 is selectively connected to the first module 5-1 by the first switch unit 10, and the second primary winding 14-2 is selectively connected to the second module 5-2 by the second switch unit 11. The secondary winding 15-1 is connected to the auxiliary battery 3. The charging control unit 9 can implement bidirectional synchronous flyback charging/discharging of at least one of the first cells 6-1 in the first and second modules 5-1; and/or at least one of the second cells 6-2 in the second module 5-2 respectively of the main battery 4 to the auxiliary battery 3.

The auxiliary battery charging apparatus 1 is configured, while the main battery 4 is charging, to actively balance the cells 6(n) in each module 5-n and to charge the auxiliary battery 3. The operation of the auxiliary battery charging apparatus 1 will now be described.

The main battery 4 is connected to an electrical charging supply, for example from a mains power supply or an electrical generator (such as an internal combustion engine provided in the vehicle 2) or an energy recovery system. The first and second module controllers 7-1, 7-2 monitor the pack current and cell voltage of each of the first and second cells 6-1, 6-2 in the respective first and second modules 5-1, 5-2 and estimate the cell capacity and state-of-charge thereof. If the first module controller 7-1 identifies one or more of the first cells 6-1 having a relatively low depth-of-discharge, the first module controller 7-1 selects the identified one or more first cell 6-1 for connection to the first winding 14-1 to charge the auxiliary battery charging unit 8. Similarly, if the second module controller 7-2 identifies one or more of the second cells 6-2 having a relatively low depth-of-discharge, the second module controller 7-2 selects the identified one or more second cell 6-2 for connection to the second winding 14-2 to charge the auxiliary battery 3.

During charging of the main battery 4, the first and second module controllers 7-1, 7-2 continuously monitor the pack current and cell voltage of the first and second cells 6-1, 6-2 in order to estimate their relative depth-of-discharge. By charging the auxiliary battery 3, the first and second cells 6-1, 6-2 can be actively balanced while the main battery 4 is charged. It will be appreciated therefore that active balancing of the first and second cells 6-1, 6-2 is performed concurrent with charging the auxiliary battery 3 and the main battery 4.

The first and second module controllers 7-1, 7-2 can be configured to balance the first cells 6-1 in the first module 5-1 with respect to each other; and to balance the second cells 6-2 in the second module 5-2 with respect to each other. If the first cells 6-1 in the first module 5-1, 5-2 are balanced with respect to each other, the first module 5-1 is not necessarily balanced with respect to the second module 5-2. Accordingly, even if the first cells 5-1 are mutually balanced, they may all need to be balanced (charged/discharged) to balance the first module 5-1 with respect to the second module 5-2. Thus, once the first and second cells 6-1, 6-2 in the respective first and second modules 5-1, 5-2 are balanced with respect to each other, the first and second modules 5-1, 5-2 are balanced relative to each other. The objective is balancing of the entire pack.

In an alternative arrangement, the first module controller 7-1 can be configured to identify the first cell 6-1 having the lowest depth-of-discharge in the first module 5-1; and the second module controller 7-2 can be configured to identify the second cell 6-2 having the lowest depth-of-discharge in the second module 5-2. The first and second cells 6-1, 6-2 identified as having the lowest depth-of-discharge in the respective first and second modules 5-1, 5-2 can then be connected in parallel to the auxiliary battery 3. The charging of the main battery 4 can continue at the same time as charging of the auxiliary battery 3 occurs.

It will be appreciated that the auxiliary battery charging apparatus 1 charges and actively balances the modules 5-n of the main battery 4 whilst also charging the auxiliary battery 3. In the event that the auxiliary battery 3 is fully charged and balancing of the modules 5 is still required, the auxiliary battery 3 could be overcharged (within predefined safe limits) or energy could be dissipated via a vehicle load (for example by energizing a heated window element). At least in certain embodiments the auxiliary battery charging apparatus 1 provides a unidirectional charge transfer from the main battery 4 to the auxiliary battery 3.

It will be appreciated that various changes and modifications can be made to the auxiliary battery charging apparatus 1 described herein. In a variant, the energy storage device 13 can be in the form of a capacitor for storing energy in an electric field. The capacitors can provide capacitive active balancing by redistributing energy from the main battery 4 to the auxiliary battery 3.

## Claims

1. A system comprising a main battery (4) and an auxiliary battery charging apparatus (1) for charging an auxiliary battery (3) from the main battery (4), the main battery (4) having at least a first module (5-1) comprising a plurality of first cells (6-1) and a second module (5-2) comprising a plurality of second cells (6-2), the main battery (4) further comprising a first module controller (7-1) for monitoring said first cells (6-1) and a second module controller (7-2) for monitoring said second cells (6-2), the auxiliary battery charging apparatus (1) configured to receive data from the first module controller (7-1) and the second module controller (7-2), the apparatus (1) comprising:

   an intermediate storage device (13) for connection to the auxiliary battery (3);
   a first switch unit (10) for selectively connecting one or more of the first cells (6-1) to the intermediate storage device (13) and a second switch unit (11) for selectively connecting one or more of said second cells (6-2) to the intermediate storage device (13);
   a charging control unit (9) having an electronic processor (12) configured to receive a first balance control signal (BAL1) for identifying one or more of said first cells (6-1) having a relatively low depth-of-discharge from the first module controller (7-1) and a second balance control signal (BAL2) for identifying one or more of said second cells (6-2) of the second module (5-2) having a relatively low depth-of-discharge from the second module controller (7-2);
   wherein, in dependence on the first balance control signal (BAL1), the electronic processor (12) is configured to output a first switch unit control signal (SW1) to control said first switch unit (10) to connect the identified one or more first cell (6-1) to the intermediate storage device (13) to charge the auxiliary battery (3) and in dependence on the second balance control signal (BAL2), the electronic processor (12) is configured to output a second switch unit control signal (SW2) to control said second switch unit (11) to connect the identified one or more second cell (6-2) to the intermediate storage device (13).

2. A system as claimed in claim 1, wherein the first module (5-1) comprises the first module controller (7-1) for monitoring said first cells (6-1) and the second module (5-2) comprises the second module controller (7-2) for monitoring said second cells (6-2).

3. A system as claimed in any one of the preceding claims, wherein the intermediate storage device (13) comprises one or more transformer (13-1, 13-2).

4. A system as claimed in claim 1 or claim 2, wherein the intermediate storage device (13) comprises one or more capacitor.

5. A system as claimed in any one of the preceding claims in combination with an auxiliary battery (3).

6. A vehicle (2) comprising a system as claimed in any one of the preceding claims.

7. A method of charging an auxiliary battery (3) from a main battery (4) by means of an auxiliary battery charging apparatus (1) comprising a first switch unit (10), a second switch unit (11), and an intermediate storage device (13), the main battery (4) having at least a first module (5-1) comprising a plurality of first cells (6-1) and a second module (5-2) comprising a plurality of second cells (6-2), the auxiliary battery charging apparatus (1) performing:

receiving a first balance control signal (BAL1) from a first module controller (7-1) in the main battery (4);
identifying from the first balance control signal (BAL1) one or more of said first cells (6-1) having a relatively low depth-of-discharge;
receiving a second balance control signal (BAL2) from a second module controller (7-2) in the main battery (4);
identifying from the second balance control signal (BAL2) one or more of said second cells (6-2) having a relatively low depth-of-discharge,
controlling the first switch unit (10) to connect the identified one or more first cell (6-1) to the intermediate storage device (13) connected to the auxiliary battery (3) to charge the auxiliary battery (3) from the main battery (4); and

controlling the second switch unit (10, 11) to connect the identified one or more second cell (6-2) to the intermediate storage device (13) to charge the auxiliary battery (3) from the main battery (4).

8. A method as claimed in claim 7, wherein, to identify said one or more of said first cells (6-1) having a relatively low depth-of-discharge, the method comprises monitoring each of said first cells (6-1) to determine one or more of the following: a pack current, a cell voltage, a cell capacity and a cell state-of-charge.

9. A method as claimed in claim 7 or claim 8, comprising monitoring the pack current, cell voltage, cell capacity and cell state-of-charge of each of said second cells (6-2) to identify said one or more second cell having a relatively low depth-of-discharge .

10. A method as claimed in any one of claims 7 to 9, wherein the intermediate storage device comprises one or more transformer (13); optionally the method comprising controlling the first switch unit (10) to supply a current to the one or more transformer (13).

11. A method as claimed in any one of claims 7 to 9, wherein the intermediate storage device (13) comprises a capacitor.

**Patentansprüche**

1. System, das eine Hauptbatterie (4) und eine Hilfsbatterieladeeinrichtung (1) zum Laden einer Hilfsbatterie (3) von der Hauptbatterie (4) umfasst, wobei die Hauptbatterie (4) wenigstens ein erstes Modul (5-1), das mehrere erste Zellen (6-1) umfasst, und ein zweites Modul (5-2) aufweist, das mehrere zweite Zellen (6-2) umfasst, wobei die Hauptbatterie (4) ferner eine erste Modulsteuerung (7-1) zum Überwachen der ersten Zellen (6-1) und eine zweite Modulsteuerung (7-2) zum Überwachen der zweiten Zellen (6-2) umfasst, wobei die Hilfsbatterieladeeinrichtung (1) konfiguriert ist, um Daten von der ersten Modulsteuerung (7-1) und der zweiten Modulsteuerung (7-2) zu empfangen, wobei die Einrichtung (1) Folgendes umfasst:

eine Zwischenspeichervorrichtung (13) für eine Verbindung mit der Hilfsbatterie (3);
eine erste Schalteinheit (10) zum wahlweisen Verbinden einer oder mehrerer der ersten Zellen (6-1) mit der Zwischenspeichervorrichtung (13) und eine zweite Schalteinheit (11) zum wahlweisen Verbinden einer oder mehrerer der zweiten Zellen (6-2) mit der Zwischenspeichervorrichtung (13);
eine Ladesteuerungseinheit (9), die einen elektronischen Prozessor (12) aufweist, der konfiguriert ist, um ein erstes Ausgleichssteuerungssignal (BAL1) zum Identifizieren einer oder mehrerer der ersten Zellen (6-1), die einen relativ geringen Entladungsgrad aufweisen, von der ersten Modulsteuerung (7-1) zu empfangen und ein zweites Ausgleichssteuerungssignal (BAL2) zum Identifizieren einer oder mehrerer der zweiten Zellen (6-2) des zweiten Moduls (5-2), die einen relativ geringen Entladungsgrad aufweisen, von der zweiten Modulsteuerung (7-2) zu empfangen;

wobei, in Abhängigkeit von dem ersten Ausgleichssteuerungssignal (BAL1), der elektronische Prozessor (12) konfiguriert ist, um ein Steuerungssignal der ersten Schalteinheit (SW1) auszugeben, um die erste Schalteinheit (10) zu steuern, um die identifizierte eine oder die identifizierten mehreren ersten Zellen (6-1) mit der Zwischenspeichervorrichtung (13) zu verbinden, um die Hilfsbatterie (3) zu laden, und, in Abhängigkeit von dem zweiten Ausgleichssteuerungssignal (BAL2), der elektronische Prozessor (12) konfiguriert ist, um ein Steuerungssignal der zweiten Schalteinheit (SW2) auszugeben, um die zweite Schalteinheit (11) zu steuern, um die identifizierte eine oder die identifizierten mehreren zweiten Zellen (6-2) mit der Zwischenspeichervorrichtung (13) zu verbinden.

**2.** System nach Anspruch 1, wobei das erste Modul (5-1) die erste Modulsteuerung (7-1) zum Überwachen der ersten Zellen (6-1) umfasst und das zweite Modul (5-2) die zweite Modulsteuerung (7-2) zum Überwachen der zweiten Zellen (6-2) umfasst.

**3.** System nach einem der vorhergehenden Ansprüche, wobei die Zwischenspeichervorrichtung (13) einen oder mehrere Transformatoren (13-1, 13-2) umfasst.

**4.** System nach Anspruch 1 oder 2, wobei die Zwischenspeichervorrichtung (13) einen oder mehrere Kondensatoren umfasst.

**5.** System nach einem der vorhergehenden Ansprüche in Kombination mit einer Hilfsbatterie (3).

**6.** Fahrzeug (2), das ein System nach einem der vorhergehenden Ansprüche umfasst.

**7.** Verfahren zum Laden einer Hilfsbatterie (3) von einer Hauptbatterie (4) mittels einer Hilfsbatterieladeeinrichtung (1), die eine erste Schalteinheit (10), eine zweite Schalteinheit (11) und eine Zwischenspeichervorrichtung (13) umfasst, wobei die Hauptbatterie (4) wenigstens ein erstes Modul (5-1), das mehrere erste Zellen (6-1) umfasst, und ein zweites Modul (5-2) aufweist, das mehrere zweite Zellen (6-2) umfasst, wobei die Hilfsbatterieladeeinrichtung (1) Folgendes durchführt:

Empfangen eines ersten Ausgleichssteuerungssignals (BAL1) von einer ersten Modulsteuerung (7-1) in der Hauptbatterie (4);
Identifizieren einer oder mehrerer der ersten Zellen (6-1), die einen relativ geringen Entladungsgrad aufweisen, aus dem ersten Ausgleichssteuerungssignal (BAL1);
Empfangen eines zweiten Ausgleichssteuerungssignals (BAL2) von einer zweiten Modulsteuerung (7-2) in der Hauptbatterie (4);
Identifizieren einer oder mehrerer der zweiten Zellen (6-2), die einen relativ geringen Entladungsgrad aufweisen, aus dem zweiten Ausgleichssteuerungssignal (BAL2),
Steuern der ersten Schalteinheit (10), um die identifizierte eine oder die identifizierten mehreren ersten Zellen (6-1) mit der Zwischenspeichervorrichtung (13) zu verbinden, die mit der Hilfsbatterie (3) verbunden ist, um die Hilfsbatterie (3) von der Hauptbatterie (4) zu laden; und
Steuern der zweiten Schalteinheit (10, 11), um die identifizierte eine oder die identifizierten mehreren zweiten Zellen (6-2) mit der Zwischenspeichervorrichtung (13) zu verbinden, um die Hilfsbatterie (3) von der Hauptbatterie (4) zu laden.

**8.** Verfahren nach Anspruch 7, wobei, um die eine oder die mehreren der ersten Zellen (6-1) zu identifizieren, die einen relativ geringen Entladungsgrad aufweisen, das Verfahren das Überwachen jeder der ersten Zellen (6-1) umfasst, um Folgendes zu bestimmen: einen Packstrom, eine Zellenspannung, eine Zellenkapazität und/oder einen Zellenladezustand.

**9.** Verfahren nach Anspruch 7 oder 8, das das Überwachen des Packstroms, der Zellenspannung, der Zellenkapazität und des Zellenladezustands jeder der zweiten Zellen (6-2) umfasst, um die eine oder die mehreren zweiten Zellen zu identifizieren, die einen relativ geringen Entladungsgrad aufweisen.

**10.** Verfahren nach einem der Ansprüche 7 bis 9, wobei die Zwischenspeichervorrichtung einen oder mehrere Transformatoren (13) umfasst; optional wobei das Verfahren das Steuern der ersten Schalteinheit (10) umfasst, um dem einen oder den mehreren Transformatoren (13) einen Strom zuzuführen.

**11.** Verfahren nach einem der Ansprüche 7 bis 9, wobei die Zwischenspeichervorrichtung (13) einen Kondensator umfasst.

## Revendications

1. Système comprenant une batterie principale (4) et un appareil de charge de batterie auxiliaire (1) destiné à charger une batterie auxiliaire (3) à partir de la batterie principale (4), la batterie principale (4) ayant au moins un premier module (5-1) comprenant une pluralité de premières cellules (6-1) et un second module (5-2) comprenant une pluralité de secondes cellules (6-2), la batterie principale (4) comprenant en outre un premier contrôleur de module (7-1) destiné à surveiller lesdites premières cellules (6-1) et un second contrôleur de module (7-2) destiné à surveiller lesdites secondes cellules (6-2), l'appareil de charge de batterie auxiliaire (1) étant configuré pour recevoir des données du premier contrôleur de module (7-1) et du second contrôleur de module (7-2), l'appareil (1) comprenant :

   un dispositif de stockage intermédiaire (13) pour la connexion à la batterie auxiliaire (3) ;
   une première unité de commutation (10) destinée à connecter sélectivement une ou plusieurs des premières cellules (6-1) au dispositif de stockage intermédiaire (13) et une seconde unité de commutation (11) destinée à connecter sélectivement une ou plusieurs desdites secondes cellules (6-2) au dispositif de stockage intermédiaire (13) ;
   une unité de commande de charge (9) ayant un processeur électronique (12) configuré pour recevoir un premier signal de contrôle d'équilibrage (BAL1) destiné à identifier une ou plusieurs desdites premières cellules (6-1) ayant une profondeur de décharge relativement faible à partir du premier contrôleur de module (7-1) et un second signal de contrôle d'équilibrage (BAL2) destiné à identifier une ou plusieurs desdites secondes cellules (6-2) du second module (5-2) ayant une profondeur de décharge relativement faible à partir du second contrôleur de module (7-2) ;
   dans lequel, en fonction du premier signal de contrôle d'équilibrage (BAL1), le processeur électronique (12) est configuré pour émettre un premier signal de commande d'unité de commutation (SW1) pour commander ladite première unité de commutation (10) pour connecter la ou les premières cellules (6-1) au dispositif de stockage intermédiaire (13) afin de charger la batterie auxiliaire (3) et en fonction du second signal de contrôle d'équilibre (BAL2), le processeur électronique (12) est configuré pour émettre un second signal de commande d'unité de commutation (SW2) pour commander ladite seconde unité de commutation (11) afin de connecter la ou les secondes cellules identifiées (6-2) au dispositif de stockage intermédiaire (13).

2. Système selon la revendication 1, dans lequel le premier module (5-1) comprend le premier contrôleur de module (7-1) destiné à surveiller lesdites premières cellules (6-1) et le second module (5-2) comprend le second contrôleur de module (7-2) destiné à surveiller lesdites secondes cellules (6-2).

3. Système selon l'une quelconque des revendications précédentes, dans lequel le dispositif de stockage intermédiaire (13) comprend un ou plusieurs transformateurs (13-1, 13-2).

4. Système selon la revendication 1 ou la revendication 2, dans lequel le dispositif de stockage intermédiaire (13) comprend un ou plusieurs condensateurs.

5. Système selon l'une quelconque des revendications précédentes en combinaison avec une batterie auxiliaire (3).

6. Véhicule (2) comprenant un système selon l'une quelconque des revendications précédentes.

7. Procédé de charge d'une batterie auxiliaire (3) à partir d'une batterie principale (4) au moyen d'un appareil de charge de batterie auxiliaire (1) comprenant une première unité de commutation (10), une seconde unité de commutation (11) et un dispositif de stockage intermédiaire (13), la batterie principale (4) ayant au moins un premier module (5-1) comprenant une pluralité de premières cellules (6-1) et un second module (5-2) comprenant une pluralité de secondes cellules (6-2), l'appareil de charge de batterie auxiliaire (1) effectuant :

   la réception d'un premier signal de contrôle d'équilibrage (BAL1) provenant d'un premier contrôleur de module (7-1) dans la batterie principale (4) ;
   l'identification à partir du premier signal de contrôle d'équilibrage (BAL1) d'une ou plusieurs desdites premières cellules (6-1) ayant une profondeur de décharge relativement faible ;
   la réception d'un second signal de contrôle d'équilibrage (BAL2) d'un second contrôleur de module (7-2) dans la batterie principale (4) ;
   l'identification à partir du second signal de contrôle d'équilibrage (BAL2) d'une ou plusieurs desdites secondes cellules (6-2) ayant une profondeur de décharge relativement faible,
   la commande de la première unité de commutation (10) pour connecter la ou les premières cellules identifiées (6-1) au dispositif de stockage intermédiaire (13) connecté à la batterie auxiliaire (3) pour charger la batterie auxiliaire (3) à partir de la batterie principale (4) ; et

la commande de la seconde unité de commutation (10, 11) pour connecter la ou les secondes cellules identifiées (6-2) au dispositif de stockage intermédiaire (13) pour charger la batterie auxiliaire (3) à partir de la batterie principale (4).

8. Procédé selon la revendication 7, dans lequel, pour identifier ladite une ou plusieurs desdites premières cellules (6-1) ayant une profondeur de décharge relativement faible, le procédé comprend la surveillance de chacune desdites premières cellules (6-1) pour déterminer un ou plusieurs des éléments suivants : un courant de bloc, une tension de cellule, une capacité de cellule et un état de charge de cellule.

9. Procédé selon la revendication 7 ou la revendication 8, comprenant la surveillance du courant de bloc, de la tension de la cellule, de la capacité de la cellule et de l'état de charge de la cellule de chacune desdites secondes cellules (6-2) pour identifier ladite une ou plusieurs secondes cellules ayant une profondeur de décharge relativement faible.

10. Procédé selon l'une quelconque des revendications 7 à 9, dans lequel le dispositif de stockage intermédiaire comprend un ou plusieurs transformateurs (13) ; éventuellement, le procédé comprenant la commande de la première unité de commutation (10) pour fournir un courant au ou aux transformateurs (13).

11. Procédé selon l'une quelconque des revendications 7 à 9, dans lequel le dispositif de stockage intermédiaire (13) comprend un condensateur.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2506388 A

- EP 0913288 A